# EUROPEAN PATENT SPECIFICATION

(11) **EP 1 541 035 B1**
(45) Date of publication and mention of the grant of the patent: **06.05.2009**
(21) Application number: 04251383.8
(22) Date of filing: 10.03.2004
(51) Int. Cl.: A23J 3/16

(54) **Soy protein concentrate with high gel strength and the process for making the same**
Sojaproteinkonzentrat mit hoher Gelfestigkeit und Verfahren zur Herstellung
Concentré de protéines de soja à force de gel haute et procédé de fabrication

(30) Priority: 09.12.2003 US 731181
(43) Date of publication of application: 15.06.2005
(73) Proprietor: SOLAE, LLC, St. Louis, MO 63102 (US)
(72) Inventor: Singh, Navpreet, St.Louis 63129 Indiana (US); Pass, Darryl W., Fort Wayne 46835 Indiana (US); Hargarten, Paul G., Auburn 46706 Indiana (US); Taylor, Richard B., Valley Park 63088 Missouri (US); Mertle, Thomas J., Ballwin 63021 Missouri (US)
(74) Representative: Hirsch & Associés

(56) References cited:
- EP-A- 1 120 626
- US-A- 3 607 860
- US-A- 4 234 620
- US-A1- 2003 045 689
- DATABASE WPI Section Ch, Week 200026 Derwent Publications Ltd., London, GB; Class D13, AN 2000-296286 XP002323119 & JP 2000 083595 A (FUJI SEIYU KK) 28 March 2000 (2000-03-28)

## Description

The present invention relates to a vegetable protein product that has a high gel strength and a high emulsion strength, and to a process for obtaining such product.

Plant protein materials are used as functional food ingredients, and have numerous applications in enhancing desirable characteristics in food products. Soy protein materials, in particular, have seen extensive use as functional food ingredients. Soy protein materials are used as emulsifiers in meats, such as frankfurters, sausages, bologna, ground and minced meats and meat patties, to bind the meat and give the meat a good texture and a firm bite. Another common application for soy protein materials as functional food ingredients is in creamed soups, gravies, and yoghurts where the soy protein material acts as a thickening agent and provides a creamy viscosity to the food product. Soy protein materials are also used as functional food ingredients in numerous other food products such as dips, dairy products, tuna products, breads, cakes, macaroni, confections, whipped toppings, baked goods and many other applications.

Soy protein concentrates and soy protein isolates, which have relatively high concentrations of protein, are particularly effective functional food ingredients due to the versatility of soy protein. Soy protein provides gelling properties and has been used to modify the texture in ground and emulsified meat products. The texture-modifying gel structure provides dimensional stability to cooked meat emulsions which results in firm texture and desired chewiness. In addition, the gel structure provides a matrix for retaining moisture and fats.

Soy protein also acts as an emulsifier in various food applications since soy proteins are surface active and collect at oil-water interfaces, inhibiting the coalescence of fat and oil droplets. The emulsification properties of soy proteins allow soy protein containing materials to be used to thicken food products such as soups and gravies. The emulsification properties of soy protein materials also permit the soy protein materials to absorb fat and therefore promote fat binding in cooked foods so that "fatting out" of the fat during cooking processes can be limited. Soy protein materials also function to absorb water and retain it in finished food products due to the hydrophilic nature of the numerous polar side chains along the peptide backbone of soy proteins. The moisture retention of a soy protein material may be utilized to decrease cooking loss of moisture in a meat product, providing a yield gain in the cooked weight of the meat product. The retained water in the finished food products is also useful for providing a more tender mouthfeel to the product.

Soy protein based meat analogue products or gelling food products, for example cheese and yoghurt, offer many health benefits to consumers. Consumer acceptance of these products is directly related to orgarioleptic qualities such as texture, flavour, mouthfeel and appearance. Protein sources for gel-based food products such as meat analogues advantageously have good gel forming properties at relatively low cooking temperatures and good water and fat binding properties.

US 3,607,860 discloses a process for producing a water-soluble soy protein which comprises the steps of obtaining soy mild from soybean meal or soybeans by water extraction at a pH above 6, precipitating and separating the soy mild at a temperature below 80°C in an acidic condition to obtain protein and then treating the protein to improve its gel-forming ability, the treating step comprising adding an alkalizing agent to the protein to adjust the pH of the protein in the range of 9 to 12, then adding an acidifying agent to the protein to approximately neutralize the protein, and thereafter heating the resultant approximately neutral protein solution to a temperature of from 60°C to 150°C, to denature the protein.
US 4,234,620 discloses a process for improving the water-solubility of a vegetable protein product, said process comprising the steps of: (A) supplying an aqueous vegetable seed feedstream to a homogenizer with said feed stream containing on a dry solids basis at least 30% by weight vegetable seed protein and a sufficient amount of base to maintain the feed stream within said homogenizer at a pH between about 6.5 to 9.0; (B) increasing the water-solubility of the vegetable seed protein by subjecting the aqueous feed stream in the homogenizer to successive pressure and cavitation cycling at a temperature between about 50°C to about 150°C; and (C) recovering the vegetable protein product having an improved water-solubility therefrom.
US 2003/045,689 discloses a process for obtaining a vegetable native protein product which is highly soluble and forms a gel upon mild heat treatment, comprising the steps of: dispersing a protein material in water around neutral pH to pH 8.3; extracting the dispersion; removing the insoluble fraction; lowering the pH of the supernatant fraction to between about 7.5 and about 5.0; neutralizing; treating the product; cooling; and spray drying.

Both the strength of a gel and how it affects a final product into which it is to be incorporated are important considerations in determining the usefulness of a gel. The emulsification strength of a material is also an important characteristic to be considered in incorporating a material into a food product. As discussed above, the functionality of soy protein gels in food products and the emulsification properties of soy protein materials in food products have been well established.

Gel strengths of soy protein materials such as soy protein concentrates and soy protein isolates vary, and there is always a need for improvements in the gel strength of soy protein concentrates and isolates. Emulsification strengths of soy protein materials such as soy protein concentrates and soy protein isolates also vary, and there is always a need for improvements in the emulsification strength of soy protein materials such as soy protein concentrates and soy protein isolates. Especially desirable, particularly for use in emulsified meat products, are soy protein materials such as soy protein concentrates and soy protein isolates that have both strong gelling properties and strong emulsification properties.

The present invention relates to a process to obtain a soy protein material composition that demonstrates a high lard gel strength and a high uncooked and cooked emulsification strength. The process involves mixing or slurrying an alcohol washed soy protein concentrate with water, adjusting the pH of the slurry to less than 6.0, removing soluble components from the slurry, readjusting the pH to at least 7.0, subjecting the resulting slurry to heat treatment such as jet cooking, and optionally shearing, to change the protein structure, and thereafter optionally drying the resulting product.

The present invention also provides a soy protein material composition obtainable by the abovementioned process, that is characterized by having a lard gel strength of at least 560.0 grams. In a preferred embodiment, the soy protein concentrate composition has a lard gel strength of greater than about 575.0 grams. In one embodiment the soy protein material composition is a soy protein concentrate composition having a lard gel strength of at least 560.0 grams and having a protein content of from 65.0 wt. % to 85.0 wt. % of total matter on a moisture free basis ("mfb"). In another embodiment the soy protein material composition is a soy protein isolate composition having a lard gel strength of at least 560.0 grams and having a protein content of at least 90 wt. % of total matter on a moisture free basis.

In another aspect, the soy protein material composition may have uncooked emulsification strength of at least 190 grams. In a preferred embodiment, the soy protein material composition has an uncooked emulsification strength of at least 225 grams. In one embodiment the soy protein material is a soy protein concentrate composition having an uncooked emulsification strength of at least 190 grams and having a protein content of from 65.0 wt. % to 85.0 wt. % of total matter on a moisture free basis ("mfb"). In another embodiment the soy protein material is a soy protein isolate composition having an uncooked emulsification strength of at least 190 grams and having protein content of at least 90 wt. % of total matter on a moisture free basis.

In a further aspect, the soy protein material composition may have a cooked emulsification strength of at least 275 grams. In a preferred embodiment, the soy protein material composition has a cooked emulsification strength of at least 300 grams. In one embodiment the soy protein material is a soy protein concentrate composition having a cooked emulsification strength of at least 275 grams and having a protein content of from 65.0 wt. % to 85.0 wt. % of total matter on a moisture free basis ("mfb"). In another embodiment the soy protein material is a soy protein isolate composition having a cooked emulsification strength of at least 275 grams and having a protein content of at least 90 wt. % of total matter on a moisture free basis.

In yet another aspect, the present invention is a food material that contains the abovementioned soy protein material having a lard gel strength of at least 560.0 grams, or an uncooked emulsion strength of at least 190.0 grams, or a cooked emulsion strength of at least 275 grams. The soy protein material composition of the present invention is capable of being incorporated into numerous food products including, but not limited to, meats and meat products, including fish, creamed soups, gravies, yoghurts, dips, dairy products, tuna products, cakes, macaroni, confections, whipped toppings, baked goods and many other applications.

As used herein, the term "soy material" is defined as a material derived from whole soybeans which contains no non-soy derived additives. Such additives may, of course, be added to a soy material to provide further functionality either to the soy material or to a food in which the soy material is utilized as a food ingredient. The term "soybean" refers to the species *Glycine max, Glycine soja*, or any species that is sexually cross compatible with *Glycine max.*

As used herein, the term "soy protein material" refers to a soy protein containing material that contains at least 40% soy protein by weight on a moisture-free basis.

As used herein, the term "soy protein concentrate" refers to soy protein containing material that contains from 65% up to 90% soy protein by weight on a moisture free basis.

As used herein, the term "soy protein isolate" refers to a soy protein containing material that contains at least 90 % soy protein by weight on a moisture free basis.

As used herein, the term "lard gel strength" refers to the gel strength of a soy protein material in a mixture of water and lard. The lard gel strength of a soy protein material may be determined by the following method. First, soy protein gels are made from a soy protein material sample as follows. 634.0 grams of 0°C (32°F) water is placed in a Stephan Vertical-Cutter/Mixer (Model No. UM-5, Stephan Machinery Corporation, Columbus, OH). 141.0 grams of the soy protein material sample is added to the cutter/mixer. A vacuum is applied to the cutter/mixer and the chopper is slowly started to prevent splattering. The sample protein material is vacuum chopped for 2 minutes at 900 rpm, while the stirring arm is moved every 30 seconds in both directions. Thereafter, the applied vacuum is terminated and the lid and sides of the bowl are scraped. 200.0 grams of room temperature lard is added to the bowl of the cutter/mixer together with 20.0 grams of salt and 5.0 grams of sodium tripolyphosphate. A vacuum is again applied to the cutter/mixer and its contents are chopped for 1 minute at 1200 rpm while the stirring arm is constantly moved in both directions. The vacuum is temporarily released and the lid and sides of the bowl are scraped. The vacuum is reapplied and the contents of the bowl are chopped for an additional 2 minutes at 1200 rpm while moving the stirring arm every 30 seconds in both directions. The target temperature for gel strength measurements according to this procedure is about 16° - 18°C (60°-65°F).

The contents of the bowl are emptied out into a 10" x 16" vacuum bag. A vacuum is applied to the bag for 30 seconds prior to heat sealing the bag. Using the vacuum bag, the test sample is placed in sausage stuffer and stuffed into four #202 metal cans. A concave surface is scraped into the face of the test samples in the cans with a spatula, and a lid is placed on the cans. The cans are sealed with the lids and steam cooked for 20 minutes at 60°C (140°F), 20 minutes at 71°C (160°F), and 20 minutes at 79°C (175°F) to an internal temperature of 73°C (165°F). The cans are left to cool at room temperature overnight before running texture analysis.

The textural quality of the gels is evaluated visually and instrumentally using a TA-XT2 Texture Analyzer (Texture Technologies Corporation, Scarsdale, NY). The texture analyser is equipped with a 12.5 mm spherical probe. All samples to be tested are equilibrated at room temperature before texture analysis. To test the samples, the bottoms of the cans are opened; however, the samples are not removed from the cans. The spherical probe of the texture analyser is allowed to penetrate the gel samples until peak force applied to the probe to push it into the gel samples is reached. Four measurements per can are taken at locations between the centre and the perimeter of can. No measurement is taken at the centre of the cans. The measurements are repeated with another can of the same sample from the cutter/mixer to provide a total of eight measurements for two cans.

Lard gel strength according to the present invention is the measured peak force in grams of the probe as it is pushed into the canned gel samples. The measured peak force is determined from a graph produced by the Texture Analyzer, where the lard gel strength is measured at the point at which the gel is broken by the probe (the first large peak on the graph, where the graph's X axis is time and the graph's Y axis is force in grams). For accuracy, lard gel strength is reported herein as an average of eight measurements.

As used herein, the term "uncooked emulsification strength" refers to strength of an emulsion formed by a soy protein material in a soybean oil and water mixture, where the emulsion is not cooked prior to testing its emulsification strength. The emulsion strength of such an emulsion may be determined by the following method. First, an emulsion is prepared of the soy protein material sample. 880 grams of soybean oil having a temperature of from 17°C to 23°C (63°-73°F) is weighed into a tared beaker. The soybean oil is then poured into the chopper bowl of a Hobart Food Cutter (Model 84142 or 84145, 1725 rpm shaft speed). 220 grams of a soy protein material sample is then dispersed over the surface of the soybean oil in the chopper bowl of the food cutter, and the food cutter and a timer are started. Immediately after the food cutter is started, 1100 ml of deionised water is added to the mixture of soybean oil and soy protein material in the chopper bowl of the cutter and the food cutter lid is closed after the water is added. After 1 minute, the food cutter and timer are stopped, the lid of the food cutter is opened, and the inside of the lid is thoroughly scraped with a rubber spatula. The lid is then reclosed and the food cutter and timer are then restarted. 44 grams of salt is added to the mixture in the chopper bowl of the food cutter four minutes after restarting the food cutter. After 5.5 minutes of total chop time, the cutter and timer are stopped and the lid is rescraped as described above, followed by restarting the food cutter and timer. After 7 minutes of total chopping time, the food cutter is stopped and 5 fluid ounce samples of an emulsion are retrieved from the emulsion ring of the food cutter in 5 fl. oz. sample cups. The sample cups are then inverted onto a flat tray made from non-absorbing material covered with plastic film and are refrigerated at 2°C to 7°C (36°-45°F). 24 to 30 hours after refrigeration the sample cups are carefully removed from the chilled emulsions in each sample cup.

The emulsion strength of the chilled emulsions are immediately measured using a TA-XT2I Texture Analyzer with a gel tester probe (available from Texture Technologies Corp., Scarsdale, NY) that is equipped with a Chatillion Dietary Scale (#R026, 500 grams capacity). The force of the Texture Analyzer is calibrated using a 5 kilogram weight, and the gel probe is calibrated to a return distance of 75 millimetres and a contact force of 1 gram. The emulsion strength of each chilled emulsion is measured by punching the gel probe of the Texture Analyzer at a speed of 0.8 mm/second and a force of 10 grams into the chilled emulsion at a point equidistant from the centre of the emulsion and the edge of the emulsion until the probe punctures the emulsion. Three measurements of emulsion strength are taken per sample at equidistant points from each other (no measurements are taken at the centre of the emulsion sample), and measurements are taken of three emulsion samples for a total of nine measurements.

The uncooked emulsification strength (in grams of force) is the measured peak force in grams of the probe as it is pushed into the uncooked emulsion. The measured peak force is determined from a graph produced by the Texture Analyzer, where the uncooked emulsification strength is measured at the point at which the emulsion is broken by the probe (the first large peak on the graph, where the graph's X axis is time and the graph's Y axis is force in grams). For accuracy, uncooked emulsification strength as used herein is reported as an average of nine measurements.

As used herein, the term "cooked emulsification strength" refers to strength of an emulsion formed by a soy protein material in a soybean oil and water mixture, where the emulsion is cooked prior to testing its emulsification strength. The emulsion strength of such an emulsion may be determined by first forming an emulsion of a soy protein material, soybean oil, and deionised water as described above with respect to measuring uncooked emulsification strength up to the point of completing the chopping in the food cutter. The inside of three 307x109 cans are sprayed with a non-stick cooking spray, and the cans are filled with emulsion retrieved from the emulsion ring of the food cutter. Excess emulsion is scraped off the top of the can with a stainless steel spatula leaving a smooth even emulsion surface at the top of the can. The cans are then sealed with a can lid sprayed with non-stick cooking spray using a can seamer.

The sealed cans are cooked in a boiling water bath for 30 minutes. The cans are then removed from the boiling water bath and chilled in an ice water bath for 15 minutes. The chilled cans are then refrigerated at 2°C to 7°C (36°-45°F) for a period of 20 to 32 hours. The lids of the cans are then removed to expose the cooked chilled emulsion.

The emulsion strength of the cooked chilled emulsions are immediately measured using a TA-XT2I Texture Analyzer with a gel tester probe (available from Texture Technologies Corp., Scarsdale, NY) that is equipped with a Chatillion Dietary Scale (#R026, 500 grams capacity). The force of the Texture Analyzer is calibrated using a 5 kilogram weight, and the gel probe is calibrated to a return distance of 45 millimetres and a contact force of 1 gram. The emulsion strength of each chilled emulsion is measured by punching the gel probe of the Texture Analyzer at a speed of 0.8 mm/second and a force of 10 grams into the chilled emulsion at a point equidistant from the centre of the emulsion and the edge of the emulsion until the probe punctures the emulsion. Three measurements of emulsion strength are taken per can of emulsion at equidistant points from each other, and measurements are taken of the three emulsion samples for a total of nine measurements.

The cooked emulsification strength (in grams of force) is the measured peak force in grams of the probe as it is pushed into the cooked emulsion. The measured peak force is determined from a graph produced by the Texture Analyzer, where the cooked emulsification strength is measured at the point at which the emulsion is broken by the probe (the first large peak on the graph, where the graph's X axis is time and the graph's Y axis is force in grams). For accuracy, cooked emulsification strength as used herein is reported as an average of nine measurements.

The term "protein content" as used herein, refers to the relative protein content of a soy material as ascertained by A.O.C.S. (American Oil Chemists Society) Official Methods Bc 4-91(1997), Aa 5-91(1997), or Ba 4d-90(1997), which determine the total nitrogen content of a soy material sample as ammonia, and the protein content as 6.25 times the total nitrogen content of the sample. The Nitrogen-Ammonia-Protein Modified Kjeldahl Method of A.O.C.S. Methods Bc4-91 (1997), Aa 5-91 (1997), and Ba 4d-90(1997) used in the determination of the protein content may be performed as follows with a soy material sample. 0.0250 - 1.750 grams of the soy material are weighed into a standard Kjeldahl flask. A commercially available catalyst mixture of 16.7 grams potassium sulphate, 0.6 grams titanium dioxide, 0.01 grams of copper sulphate, and 0.3 grams of pumice is added to the flask, then 30 millilitres of concentrated sulphuric acid is added to the flask. Boiling stones are added to the mixture, and the sample is digested by heating the sample in a boiling water bath for approximately 45 minutes. The flask should be rotated at least 3 times during the digestion. 300 millilitres of water is added to the sample, and the sample is cooled to room temperature. Standardized 0.5N hydrochloric acid and distilled water are added to a distillate receiving flask sufficient to cover the end of a distillation outlet tube at the bottom of the receiving flask. Sodium hydroxide solution is added to the digestion flask in an amount sufficient to make the digestion solution strongly alkaline. The digestion flask is then immediately connected to the distillation outlet tube, the contents of the digestion flask are thoroughly mixed by shaking, and heat is applied to the digestion flask at about a 7.5-min boil rate until at least 150 millilitres of distillate is collected. The contents of the receiving flask are then titrated with 0.25N sodium hydroxide solution using 3 or 4 drops of methyl red indicator solution - 0.1 % in ethyl alcohol. A blank determination of all the reagents is conducted simultaneously with the sample and similar in all respects, and correction is made for blank determined on the reagents. The moisture content of the ground sample is determined according to the procedure described below (A.O.C.S. Official Method Ba 2a-38). The nitrogen content of the sample is determined according to the formula: Nitrogen (%) = 1400.67 x [[(Normality of standard acid) x (Volume of standard acid used for sample (ml))] - [(Volume of standard base needed to titrate 1 ml of standard acid minus volume of standard base needed to titrate reagent blank carried through method and distilled into 1 ml standard acid (ml)) x (Normality of standard base)] - [(Volume of standard base used for the sample (ml)) x (Normality of standard base)]] / (Milligrams of sample). The protein content is 6.25 times the nitrogen content of the sample.

The term "moisture content" as used herein refers to the amount of moisture in a material. The moisture content of a soy material can be determined by A.O.C.S. (American Oil Chemists Society) Method Ba 2a-38 (1997). According to the method, the moisture content of a soy material may be measured by passing a 1000 gram sample of the soy material through a 6 x 6 riffle divider, available from Seedboro Equipment Co., Chicago, Illinois, and reducing the sample size to 100 grams. The 100 gram sample is then immediately placed in an airtight container and weighed. 5 grams of the sample are weighed onto a tared moisture dish (minimum 30 gauge, approximately 50 x 20 millimetres, with a tight-fitting slip cover - available from Sargent-Welch Co.). The dish containing the sample is placed in a forced draft oven and dried at 130 ± 3°C (261°-271°F) for 2 hours. The dish is then removed from the oven, covered immediately, and cooled in a desiccator to room temperature. The dish is then weighed. Moisture content is calculated according to the formula: Moisture content (%) = 100 x [(loss in mass (grams) / mass of sample (grams)].

The term "soy flour" as used herein means a soy protein material that is particulate and contains less than 65% soy protein content by weight on a moisture free basis which is formed from dehulled soybeans and which has an average particle size of 150 microns or less. A soy flour may contain fat inherent in soy or may be defatted.

The term "soy grit" as used herein means a soy protein material that is particulate and contains less than 65% soy protein content by weight on a moisture free basis which is formed from dehulled soybeans and which has an average particle size of from 150 microns to 1000 microns. A soy grit may contain fat inherent in soy or may be defatted.

The term "soy meal" as used herein means a soy protein material that is particulate and contains less than 65% soy protein content by weight on a moisture free basis which is formed from dehulled soybeans and which does not fall within the definition of a soy flour or a soy grit. The term soy meal is intended to be utilized herein as a catchall for particulate soy protein containing materials having less than 65% protein on a moisture free basis which do not fit the definition of a soy flour or a soy grit. A soy meal may contain fat inherent in soy or may be defatted.

The term "soy flakes" as used herein means a soy protein material that is a flaked soy material containing less than 65% soy protein content by weight on a moisture free basis formed by flaking dehulled soybeans. Soy flakes may contain fat inherent in soy or may be defatted.

The term "weight on a moisture free basis" as used herein refers to the weight of a material after it has been dried to completely remove all moisture, i.e. the moisture content of the material is 0%. Specifically, the weight on a moisture free basis of a soy material can be obtained by weighing the soy material after the soy material has been placed in a 45°C (113°F) oven until the soy material reaches a constant weight.

The term "nitrogen solubility index" as used herein is defined as: (% water soluble nitrogen of a protein containing sample / % total nitrogen in protein containing sample) x 100. The nitrogen solubility index provides a measure of the percent of water soluble protein relative to total protein in a protein containing material. The nitrogen solubility index of a soy material is measured in accordance with standard analytical methods, specifically A.O.C.S. Method Ba 11-65. According to the Method Ba 11-65, 5 grams of a soy material sample ground fine enough so that at least 95% of the sample will pass through a U.S. grade 100 mesh screen (average particle size of less than about 150 microns) is suspended in 200 millilitres of distilled water, with stirring at 120 rpm, at 30°C (86°F) for two hours, and then is diluted to 250 millilitres with additional distilled water. If the soy material is a full-fat material the sample need only be ground fine enough so that at least 80% of the material will pass through a U.S. grade 80 mesh screen (approximately 175 microns), and 90% will pass through a U.S. grade 60 mesh screen (approximately 205 microns). Dry ice should be added to the soy material sample during grinding to prevent denaturation of sample. 40 millilitres of the sample extract is decanted and centrifuged for 10 minutes at 1500 rpm, and an aliquot of the supernatant is analysed for Kjeldahl protein (PRKR) to determine the percent of water soluble nitrogen in the soy material sample according to A.O.C.S. Official Methods Bc 4-91 (1997), Ba 4d-90, or Aa 5-91, as described above. A separate portion of the soy material sample is analysed for total protein by the PRKR method to determine the total nitrogen in the sample. The resulting values of Percent Water Soluble Nitrogen and Percent Total Nitrogen are utilized in the formula above to calculate the nitrogen solubility index.

The soy protein material composition of the present invention is obtained by a method which generally includes the steps of providing an alcohol washed soy protein material, preferably an alcohol washed soy protein concentrate; mixing or slurrying an amount of the alcohol washed soy protein material, e.g. concentrate, with water to obtain an aqueous slurry containing between 1.0 and 15.0 wt. % solids; adjusting the pH of the slurry to less than 6.0; removing soluble components while retaining proteins in the slurry; adjusting the pH of the slurry to a pH of 7.0 or greater; subjecting the pH-adjusted slurry to heat treatment at a temperature of from 75°C to 180°C (156°-356°F), such as jet cooking at high temperature; optionally shearing the heated slurry; and optionally drying the slurry.

The starting material of the present process is an alcohol washed soy protein concentrate. Alcohol washed soy protein concentrates, sometimes known in the art as "traditional" soy protein concentrates, are commercially available from many sources. One alcohol washed soy protein concentrate which is suitable as a starting material for the present invention is Procon^{®} 2000, which is available from The Solae Company of St. Louis, Missouri. Another suitable commercially available alcohol washed soy protein concentrate is Danpro H^{®} , also available from The Solae Company.

It is to be understood that rather than use a commercially available alcohol washed soy protein concentrate as the starting material in the present invention, the starting material can be soy flour, soy grits, soy meal, or soy flakes from which an alcohol washed soy protein concentrate can be produced using by washing the soy flour, soy grits, soy meal, or soy flakes with a low molecular weight aqueous alcohol, preferably aqueous ethanol, followed by desolventising the alcohol washed soy protein material. Soy flour, soy grits, soy meal, or soy flakes are commercially available, or, alternatively, may be produced from soybeans according to processes well known in the art. The thus produced alcohol washed soy concentrate can then be used in the process as described herein.

The alcohol washed soy protein concentrate is first slurried with water at a solids content of from 1.0 wt. % to 15.0 wt. %. Preferably, the alcohol washed soy protein concentrate is slurried with water at a solids content of from 1.0 wt. % to 10.0 wt. %. The water used to slurry the soy protein concentrate is preferably heated to a temperature of 27°C to 82°C (80°-180°F). A temperature of 49°C (120°F) was found to be particularly suitable for purposes of the present invention.

The pH of the slurry is adjusted to less than 6.0 in order to solubilise the minerals in the slurry while minimizing protein solubility to facilitate removal of the minerals and other solubles in a subsequent separation process, as described below. In a preferred embodiment, the pH is adjusted to between 4.3 and 5.3, preferably between 5.0 and 5.2, or, to about the isoelectric point of soy protein which is between pH 4.4 and 4.6. The pH of the slurry can be adjusted by addition of hydrochloric acid or other suitable edible organic or inorganic acid.

After pH adjustment, the slurry is subjected to a separation process to remove soluble components. Suitable processes for removing soluble components include centrifugation, ultrafiltration and other conventional separation processes. The solubles separation step is particularly important to produce the high lard gel strength, high emulsification strength soy protein material of the present invention, and is particularly unexpected to significantly affect the characteristics of an alcohol washed soy protein concentrate. Alcohol washing to produce the alcohol washed soy protein removes large amounts of "soy solubles". As such, it is unexpected that further removal of solubles would affect the characteristics of a soy protein material already washed with alcohol since it would be expected that the alcohol wash would have removed a large majority of such solubles. It is preferred that this solubles removing step is carried out immediately after the pH adjustment without any intervening step.

According to one embodiment of the present invention, the slurry is subjected to an ultrafiltration separation process using a membrane having a molecular weight cut off ("MWCO") between 10,000 to 1,000,000, and preferably a MWCO of about 50,000. A tubular membrane was determined to be particularly suitable for production of the soy protein concentrate of the present invention. Tubular membranes of different MWCO are commercially and readily available. Some of the vendors are Koch Membrane Systems, Wilmington, MA; PTI Advanced Filtration, Oxnard, CA; and PCI Membrane Systems, Milford, OH. The soluble components are permeated through the membrane as permeate, and proteins are retained by the membrane as retentate.

According to another embodiment, the slurry is subjected to a centrifugation separation process. A preferred centrifuge is a decanting centrifuge. The soluble components are removed in the liquor fraction, while insoluble materials such as the soy protein are retained in the insoluble cake of the centrifuge. Optionally, the centrifuge process may be repeated one or more times, in which the centrifuge cake of a first centrifugation is diluted with water and then is centrifuged again.

In a preferred embodiment of the centrifuge separation process, the liquor (soluble fraction) of the centrifuge may be further processed using a spiral-wound membrane to recover insoluble proteins in the retentate while removing soluble compounds in the permeate. The liquor is subjected to ultrafiltration using a membrane having a molecular weight cut off (MWCO) between 1,000 to 30,000, and preferably a MWCO of about 10,000. A spiral-wound membrane was determined to be particularly suitable for the recovery of proteins from the liquor. Spiral-wound membranes of different MWCO are commercially and readily available. Some of the vendors are Koch Membrane Systems, Wilmington, MA; GE Osmonics, Minnetonka, MN; PTI Advanced Filtration, Oxnard, CA; and Synder Filtration, Vacaville, CA.

The slurry retained after removing the soluble components by the above separation processes is increased in protein content and has a reduced ash content due to removal of the minerals. This slurry is the retentate when a membrane process is used; a centrifuge cake when a centrifugation process is used; or a composite of centrifuge cake and membrane retentate when a centrifugation process is used followed by a membrane process to recover proteins. If a centrifugation process is used, the centrifuge cake or the composite of centrifuge cake and membrane retentate are diluted to make slurry of from 7.0 wt. % to 20 wt. % solids, preferably from 10.0 wt. % to 15.0 wt. % solids, and most preferably from 12 wt. % to 13 wt. % solids.

After removing the solubles, the pH of the slurry is adjusted to 7.0 or more in order to neutralize the slurry, thereby increasing the solubility of the protein in the slurry. In one embodiment, the pH is adjusted to a pH of from 7.0 to 7.5, where pH 7.2 has been found to be particularly suitable. The pH of the slurry can be adjusted by addition of any suitable organic or inorganic base, preferably sodium hydroxide. Preferably, the pH adjustment of the slurry is carried out immediately after the solubles removing step, without any other intervening step.

To produce a soy protein concentrate composition in accordance with the present invention, the resulting pH adjusted slurry is subjected to a heat treatment or cooking process, and optionally to a shearing process, to change the protein structure and to yield a final product that can optionally be dried. Preferably, the heat treatment of the pH adjusted slurry is carried out immediately after the pH adjustment, without any other intervening step, except, optionally, the shearing process.

The heat treatment or cooking process and the optional shearing process changes the structure of the protein to improve the functionality of the protein, producing a product that has high gel strength. Although any cooking process or apparatus can be used provided the soy protein material is subjected to sufficient heat for a sufficient period of time to change the structure of the soy protein material, jet cooking is deemed to be particularly suitable for commercial production of the soy protein concentrate of the present invention. Preferably the neutralized slurry of soy protein material is treated at a temperature of from about 75°C to about 180°C (167°-356°F) for a period of from about 2 seconds to about 2 hours to change the structure of the soy protein in the soy protein material, where the soy protein material slurry is heated for a longer time period at lower temperatures to change the structure of the soy protein in the soy protein material. Preferably, the neutralized slurry is heat treated at a temperature of from 135°C to 180°C (275°-356°F) for a period of 5 to 30 seconds, and most preferably the slurry is heat treated at a temperature of from 145°C to 155°C (293°-311°F) for a period of from 5 to 15 seconds. Most preferably the soy protein material slurry is treated at an elevated temperature and under a positive pressure greater than atmospheric pressure.

As noted above, the preferred method of heat treating the soy protein material slurry is jet-cooking, which consists of injecting pressurized steam into the slurry to heat the slurry to the desired temperature. The following description is a preferred method of jet-cooking the soy protein material slurry, however, the invention is not limited to the described method and includes any obvious modifications which may be made by one skilled in the art.

The soy protein material slurry is introduced into a jet-cooker feed tank where the soy protein material is kept in suspension with a mixer which agitates the soy protein material slurry. The slurry is directed from the feed tank to a pump that forces the slurry through a reactor tube. Steam is injected into the soy protein material slurry under pressure as the slurry enters the reactor tube, instantly heating the slurry to the desired temperature. The temperature is controlled by adjusting the pressure of the injected steam, and preferably is from about 75°C to about 180°C(167°-356°F), more preferably from about 135°C to 180°C (275°-356°F).

After jet cooking, the slurry is held at a high temperature for a period of from 5 seconds to 240 seconds. A total holding time of from 30 seconds to 180 seconds is particularly suitable for the purposes of the present invention.

After cooking, preferably prior to holding the slurry at high temperature, the slurry is optionally subjected to a shearing process to further change the structure of the proteins. Any suitable shearing equipment can be used such as shearing pumps, shearing mixers, or cutting mixers. One suitable shear pump is a Dispax Reactor dispersing pump with three stages (IKA Works, Wilmington, NC). These pumps may be equipped with coarse, medium, fine and superfine generators. Each generator consists of a stator and a rotor. A preferred embodiment is to use two fine generators and a superfine generator in the three stages of the pump. Another suitable pump is a high pressure homogeniser. Other shear pumps are commercially available from Fristam Pumps Inc., Middleton, WI and Waukesha Cherry-Burrell, Delavan, WI.

After cooking, optionally shearing the soy protein material, and holding the heated slurry at a high temperature, the slurry is then cooled. Preferably the slurry is flash cooled to a temperature of from 60°C to 93°C (140°F-200°F), and most preferably flash cooled to a temperature of from 80°C to 90°C (176°-194°F). The slurry is flash cooled by introducing the heated slurry into a vacuumised chamber having a cooler internal temperature than the temperature used to heat treat the soy protein material slurry and having a pressure significantly less than atmospheric pressure. Preferably the vacuum chamber has an internal temperature of from 15°C to 85°C (59°-185°F) and a pressure of from about 25 mm to about 100 mm Hg, and more preferably a pressure of from about 25 mm Hg to about 30 mm Hg. Introduction of the heated soy protein material slurry into the vacuum chamber instantly drops the pressure around the soy protein material slurry causing vaporization of a portion of the water from the slurry thereby cooling the slurry.

Flash cooling is the preferred cooling process, although it may be replaced by any other suitable cooling process which is capable of reducing the temperature to about 140-200°F (60-93°C) in a short period of time.

The cooled slurry of soy protein material may then be dried to produce the powdered soy protein concentrate composition of the present invention. The cooled slurry is preferably spray-dried to produce the soy protein material composition of the present invention. The spray-dry conditions should be moderate to avoid further denaturing the soy protein in the soy protein material. Preferably the spray-dryer is a co-current flow dryer where hot inlet air and the soy protein material slurry, atomised by being injected into the dryer under pressure through an atomizer, pass through the dryer in a co-current flow. The soy protein in the soy protein material is not subject to further denaturation since the evaporation of water from the soy protein material cools the material as it dries.

In a preferred embodiment, the cooled slurry of soy protein material is injected into the dryer through a nozzle atomizer. Although a nozzle atomizer is preferred, other spray-dry atomizers, such as a rotary atomizer, may be utilized. The slurry is injected into the dryer under enough pressure to atomise the slurry. Preferably the slurry is atomised under a pressure of about 3000 psig to about 4000 psig, and most preferably about 3500 psig.

Although spray-drying the soy protein material is the preferred method of drying, drying may be carried out by any suitable process. Tunnel drying, for example, is another suitable method for drying the soy protein material.

Alternatively, a soy protein isolate composition may be produced in accordance with the present invention. Preferably the soy protein isolate is produced by separating soluble soy protein materials from insoluble materials (such as soy fibre) from the cooled slurry prior to drying the slurry. The cooled slurry is agitated in a mixer to maximize the solubility of the soy protein in the liquid portion of the slurry. The liquid portion of the slurry is then separated from the insoluble portion of the slurry to form a soy protein material containing extract. The liquid portion of the slurry may be separated from the insoluble portion of the slurry by conventional separation means such as centrifugation, filtration, and ultrafiltration. Most preferably, the soy protein containing extract is separated from insolubles using centrifugation. After the soy protein containing extract is separated from the insolubles, the extract is dried as described above to produce a soy protein isolate composition in accordance with the present invention.

A soy protein isolate composition may also be produced by separating a soy protein containing extract from soy insolubles in the neutralized slurry after removing the solubles at acid pH and prior to heat treating the material. The neutralized slurry is agitated to maximize solubility of the soy protein in the liquid portion of the slurry. The soy protein containing liquid portion of the slurry is then separated from the insoluble portion of the slurry to form a soy protein material containing extract. The liquid portion of the slurry may be separated from the insoluble portion of the slurry by conventional separation means such as centrifugation, filtration, and ultrafiltration. Most preferably, the soy protein material containing extract is separated from insolubles by centrifugation. After the soy protein material containing extract is separated from the insolubles, the extract is heat treated, optionally sheared, held at elevated temperatures, cooled, and dried as described above to produce a soy protein isolate composition in accordance with the present invention.

It is preferred to produce a soy protein isolate composition from an alcohol washed soy protein material that has not been dried prior to use in the process of the present invention. Specifically, it is preferred to alcohol wash soy flour, soy flakes, soy grit, or soy meal to form the alcohol washed soy protein concentrate as the first step in producing a soy protein isolate composition of the present invention instead of using a commercially available alcohol washed soy protein concentrate powder that has been dried. Alcohol washed soy protein concentrates that have been dried after being washed with alcohol have decreased soy protein solubility in aqueous solutions relative to alcohol washed soy protein concentrates that have not been dried that are then further processed. In the separation of the soy protein from insoluble fibre to form a protein extract in the production of a soy protein isolate, it is desirable to have maximum soy protein solubility in order to reduce the amount of soy protein lost with the insoluble fraction.

The soy protein material composition of the present invention has a high lard gel strength, a high uncooked emulsification strength, and a high cooked emulsification strength. The soy protein material composition also preferably has a very low ash content. The soy protein material of the present invention has a lard gel strength of at least 560 grams, and more preferably has a lard gel strength of at least 575 grams. In a most preferred embodiment, the soy protein material composition of the present invention has a lard gel strength of at least 600 grams. The soy protein material composition of the present invention also has an uncooked emulsification strength of at least 190 grams, and more preferably of at least 225 grams. The soy protein material composition of the present invention further has a cooked emulsification strength of at least 275 grams, and more preferably of at least 300 grams. The ash content of the soy protein material composition of the present invention is at most 4.5 wt. % on a moisture free basis, more preferably at most 3.5 wt. % on a moisture free basis, and most preferably at most 3.0 wt. % on a moisture free basis.

The soy protein concentrate composition has the above lard gel strength, uncooked emulsification strength, cooked emulsification strength, and ash content characteristics and further has a protein content of from 65% to 90% by weight on a moisture free basis, and more preferably has a protein content of from 75% to 85% by weight on a moisture free basis.

The soy protein isolate composition has the above lard gel strength, uncooked emulsification strength, cooked emulsification strength, and ash content characteristics, and further has a protein content of at least 90% by weight on a moisture free basis.

The soy protein material composition of the present invention is useful in numerous food applications to provide thickening, emulsification, and structural properties to foods. The soy protein material composition may be used in meat applications, particularly emulsified meats, soups, gravies, yoghurts, dairy products, and breads.

To use the soy protein material composition in a food application, the soy protein material composition - having at least one physical property selected from the group consisting of a lard gel strength of at least 560.0 grams, an uncooked emulsification strength of at least 190.0 grams, and a cooked emulsification strength of at least 275.0 grams - is combined and blended with at least one food ingredient. The food ingredient(s) is/are selected based upon the desired food product. Food ingredients that may be used with the soy protein material composition of the present invention include: emulsified meats; soup stock for producing soups; dairy ingredients, including cultured dairy products; and bread ingredients.

A particularly preferred application in which the soy protein material composition of the present invention is used is in emulsified meats. The soy protein material composition may be used in emulsified meats to provide structure to the emulsified meat, which gives the emulsified meat a firm bite and a meaty texture. The soy protein material composition also decreases cooking loss of moisture from the emulsified meat by readily absorbing water, and prevents "fatting out" of the fat in the meat so the cooked meat is juicier.

The meat material used to form a meat emulsion in combination with the soy protein material composition of the present invention is preferably a meat useful for forming sausages, frankfurters, or other meat products which are formed by filling a casing with a meat material, or can be a meat which is useful in ground meat applications such as hamburgers, meat loaf and minced meat products. Particularly preferred meat materials used in combination with the soy protein material composition include mechanically deboned meat from chicken, beef, and pork; pork trimmings; beef trimmings; and pork backfat.

A meat emulsion containing a meat material and the soy protein material composition contains quantities of each which are selected to provide the meat emulsion with desirable meat-like characteristics, especially a firm texture and a firm bite. Preferably the soy protein material composition is present in the meat emulsion in an amount of from about 1 % to about 30%, by weight, more preferably from about 3% to about 20%, by weight. Preferably the meat material is present in the meat emulsion in an amount of from about 35% to about 70%, by weight, more preferably from about 40% to about 60%, by weight. The meat emulsion also contains water, which is preferably present in an amount of from about 25% to about 55%, by weight, and more preferably from about 30% to about 40%, by weight.

The meat emulsion may also contain other ingredients that provide preservative, flavouring, or coloration qualities to the meat emulsion. For example, the meat emulsion may contain salt, preferably from about 1% to about 4% by weight; spices, preferably from about 0.01 % to about 3% by weight; and preservatives such as nitrates, preferably from about 0.01 to about 0.5% by weight.

The following non-limiting examples illustrate various features and characteristics of the present invention which are not to be construed as limited thereto.

### EXAMPLE 1

A composition of the present invention is prepared by washing an alcohol washed soy protein concentrate with an aqueous wash having a pH slightly above the isoelectric point of soy protein utilizing a combination of centrifugation and ultrafiltration, then cooking and shearing the washed protein material at a pH of 7.2. About 50.0 lbs of Procon^{®} 2000 (a commercially available traditional alcohol washed soy protein concentrate) is mixed with 70.0 gallons of water that is preheated to 120°F (49°C). The pH of the mixture is adjusted to about 5.1 using hydrochloric acid and the mixing is continued for another 20 minutes. The slurry is centrifuged in a decanting centrifuge at feed rate of 2 gallons per minute. The centrifuge cake is diluted to about 8.0 wt. % solids using water preheated to 120°F (49°C). The slurry is again centrifuged in a decanting centrifuge at feed rate of 2 gallons per minute. The supernatant (liquor) from the two centrifugations is mixed and transferred to the feed tank of the membrane system. The liquor is ultrafiltered using a 10,000 molecular weight cut-off (MWCO) spiral-wound membrane to remove about 90.0 wt. % of the feed volume as permeate. The retentate from the membrane system and the cake from the second centrifugation are mixed, and additional water is added to dilute the slurry to about 13.0 wt. % solids. The pH of the slurry is adjusted to about 7.2 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 3 minutes and then flashed into a flash cooler with 15" of vacuum. The flash cooled slurry is spray dried. The dried product is analysed to determine the ash content thereof, and lard gel strength, protein content, and NSI are determined according to the procedures described herein. The results of the analysis are shown in Table 1.

**Table 1**

| | |
|---|---|
| Lard Gel Strength, g | 595.0 |
| Protein (wt. %, mfb) | 76.32 |
| Ash (wt. %, mfb) | 3.04 |
| Calcium (wt. %, mfb) | 0.37 |
| Potassium (wt. %, mfb) | 0.33 |
| Magnesium (wt. %, mfb) | 0.12 |
| Sodium (wt. %, mfb) | 0.75 |
| Nitrogen Solubility Index, NSI (%) | 55.7 |

### EXAMPLE 2

A composition of the present invention is prepared by washing an alcohol washed soy protein concentrate with an aqueous wash having a pH slightly above the isoelectric point of soy protein utilizing centrifugation only, then cooking and shearing the washed protein material at a pH of 7.2. About 50.0 lbs of Procon^{®} 2000 (a commercially available traditional alcohol washed soy protein concentrate) is mixed with 70.0 gallons of water preheated to 120°F (49°C). The pH of the mixture is adjusted to about 5.1 using hydrochloric acid and the mixing is continued for another 20 minutes. The slurry is centrifuged in a decanting centrifuge at feed rate of 2 gallons per minute. The centrifuge cake is diluted to about 8.0 wt. % solids using water preheated to 120°F (49°C). The slurry is again centrifuged in a decanting centrifuge at feed rate of 2 gallons per minute. The supernatant (liquor) from the two centrifugations is discarded. The cake from the second centrifugation is diluted with water to about 13.0 wt. % solids. The pH of the slurry is adjusted to about 7.2 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 3 minutes and then flashed into a flash cooler with 15" of vacuum. The flash cooled slurry is spray dried. The dried product is analysed to determine the ash content thereof, and lard gel strength, protein content and NSI are determined according to the procedures described herein. The results of the analysis are shown in Table 2.

**Table 2**

| | |
|---|---|
| Lard Gel Strength, g | 607.0 |
| Protein (wt. %, mfb) | 79.81 |
| Ash (wt. %, mfb) | 3.27 |
| Calcium (wt. %, mfb) | 0.27 |
| Potassium (wt. %, mfb) | 0.40 |
| Magnesium (wt. %, mfb) | 0.08 |
| Sodium (wt. %, mfb) | 0.74 |
| Nitrogen Solubility Index, NSI (%) | 46.7 |

### EXAMPLE 3

A composition of the present invention is prepared by washing an alcohol washed soy protein concentrate with an aqueous wash having a pH slightly above the isoelectric point of soy protein utilizing centrifugation only, then cooking and shearing the washed protein material at a pH of 7.5. About 50.0 lbs (22.7 kg) of Procon^{®} 2000 (a commercially available traditional alcohol washed soy protein concentrate) is mixed with 70.0 gallons of water preheated to 120°F (49°C). The pH of the mixture is adjusted to about 5.0 using hydrochloric acid and the mixing is continued for another 20 minutes. The slurry is again centrifuged in a decanting centrifuge at feed rate of 2 gallons per minute. The centrifuge cake is diluted to about 8.0 wt. % solids using water preheated to 120°F (49°C). The slurry is centrifuged in a decanting centrifuge at feed rate of 2 gallons per minute. The supernatant (liquor) from the two centrifugations is discarded. The cake from the second centrifugation is diluted with water to about 12.5 wt. % solids. The pH of the slurry is adjusted to about 7.5 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 3 minutes and then flashed into a flash cooler with 15" of vacuum. The flash cooled slurry is spray dried. The dried product is analysed to determine the ash content thereof, and lard gel strength, protein content, and NSI are determined according to the procedures described herein. The results of the analysis are shown in Table 3.

**Table 3**

| | |
|---|---|
| Lard Gel Strength, g | 571.0 |
| Protein (wt. %, mfb) | 79.06 |
| Ash (wt. %, mfb) | 3.87 |
| Calcium (wt. %, mfb) | 0.28 |
| Potassium (wt. %, mfb) | 0.16 |
| Magnesium (wt. %, mfb) | 0.08 |
| Sodium (wt. %, mfb) | 1.14 |
| Nitrogen Solubility Index,-NSI (%) | 66.3 |

### EXAMPLE 4

A composition of the present invention is prepared by washing an alcohol washed soy protein concentrate with an aqueous wash having a pH at the isoelectric point of soy protein utilizing centrifugation only, then cooking the washed protein material at a pH of 7.5 without subjecting the washed protein material to shear. About 50.0 lbs (22.7 kg) of Procon^{®} 2000 (a commercially available traditional alcohol washed soy protein concentrate) is mixed with 70.0 gallons of water preheated to 133°F (56°C). The pH of the mixture is adjusted to about 4.5 using hydrochloric acid and the mixing is continued for another 20 minutes. The slurry is centrifuged in a decanting centrifuge at feed rate of 2 gallons per minute. The centrifuge cake is diluted to about 8.0 wt. % solids using water preheated to 133°F (56°C). The slurry is again centrifuged in a decanting centrifuge at feed rate of 2 gallons per minute. The supernatant (liquor) from the two centrifugations is discarded. The cake from the second centrifugation is diluted with water to about 12.5 wt. % solids. The pH of the slurry is adjusted to about 7.5 using sodium hydroxide. This slurry is then jet cooked to a temperature of about 300°F (149°C), held for 3 minutes and then flashed into a flash cooler with 15" of vacuum. The flash cooled slurry is spray dried. The dried product is analysed to determine the ash content thereof, and lard gel strength, protein content, and NSI are determined according to the procedures described herein. The results of the analysis are shown in Table 4.

**Table 4**

| | |
|---|---|
| Lard Gel Strength, g | 591.0 |
| Protein (wt. %, mfb) | 77.75 |
| Ash (wt. %, mfb) | 4.02 |
| Calcium (wt. %, mfb) | 0.29 |
| Potassium (wt. %, mfb) | 0.17 |
| Magnesium (wt. %, mfb) | 0.09 |
| Sodium (wt. %, mfb) | 1.34 |
| Nitrogen Solubility Index, NSI (%) | 58.7 |

### EXAMPLE 5

A composition of the present invention is prepared by washing an alcohol washed soy protein concentrate with an aqueous wash having a pH at the isoelectric point of soy protein utilizing centrifugation only, then cooking and shearing the washed protein material at a pH of 7.5. About 50.0 lbs (22.7 kg) of Procon^{®} 2000 (a commercially available traditional alcohol washed soy protein concentrate) is mixed with 70.0 gallons of water preheated to 133°F (56°C). The pH of the mixture is adjusted to about 4.5 using hydrochloric acid and the mixing is continued for another 20 minutes. The slurry is centrifuged in a decanting centrifuge at feed rate of 2 gallons per minute. The centrifuge cake is diluted to about 8.0 wt. % solids using water preheated to 133°F (56°C). The slurry is again centrifuged in a decanting centrifuge at feed rate of 2 gallons per minute. The supernatant (liquor) from the two centrifugations is discarded. The cake from the second centrifugation is diluted with water to about 12.5 wt. % solids. The pH of the slurry is adjusted to about 7.5 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 3 minutes and then flashed into a flash cooler with 15" of vacuum. The flash cooled slurry is spray dried. The dried product is analysed to determine the ash content thereof, and lard gel strength, protein content, and NSI are determined according to the procedures described herein. The results of the analysis are shown in Table 5.

**Table 5**

| | |
|---|---|
| Lard Gel Strength, g | 666.0 |
| Protein (wt. %, mfb) | 77.56 |
| Ash (wt. %, mfb) | 4.44 |
| Calcium (wt. %, mfb) | 0.30 |
| Potassium (wt. %, mfb) | 0.12 |
| Magnesium (wt. %, mfb) | 0.09 |
| Sodium (wt. %, mfb) | 1.46 |
| Nitrogen Solubility Index, NSI (%) | 59.8 |

### EXAMPLE 6

A composition of the present invention is prepared by washing an alcohol washed soy protein concentrate with an aqueous wash having a pH slightly above the isoelectric point of soy protein utilizing centrifugation only, then cooking and shearing the washed protein material at a pH of 7.5. About 50.0 lbs (22.7 kg) of Procon® 2000 (a commercially available traditional alcohol washed soy protein concentrate) is mixed with 70.0 gallons of water preheated to 133°F (56°C). The pH of the mixture is adjusted to about 5.0 using hydrochloric acid and the mixing is continued for another 20 minutes. The slurry is centrifuged in a decanting centrifuge at feed rate of 2 gallons per minute. The centrifuge cake is diluted to about 8.0 wt. % solids using water preheated to 133°F (56°C). The slurry is again centrifuged in a decanting centrifuge at feed rate of 2 gallons per minute. The supernatant (liquor) from the two centrifugations is discarded. The cake from the second centrifugation is diluted with water to about 12.5 wt. % solids. The pH of the slurry is adjusted to about 7.5 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 3 minutes and then flashed into a flash cooler with 15" of vacuum. The flash cooled slurry is spray dried. The dried product is analysed to determine the ash content thereof, and lard gel strength, protein content, and NSI are determined according to the procedure described herein. The results of the analysis are shown in Table 6.

**Table 6**

| | |
|---|---|
| Lard Gel Strength, g | 633.0 |
| Protein (wt. %, mfb) | 79.81 |
| Ash (wt. %, mfb) | 3.27 |
| Calcium (wt. %, mfb) | 0.31 |
| Potassium (wt. %, mfb) | 0.24 |
| Magnesium (wt. %, mfb) | 0.09 |
| Sodium (wt. %, mfb) | 1.07 |
| Nitrogen Solubility Index, NSI (%) | 65.1 |

### EXAMPLE 7

A composition of the present invention is prepared by washing an alcohol washed soy protein concentrate with an aqueous wash having a pH at the isoelectric point of soy protein utilizing ultrafiltration only, then cooking and shearing the washed protein material at a pH of 7.5. About 50.0 lbs (22.7 kg) of Procon^{®} 2000 (a commercially available traditional alcohol washed soy protein concentrate) is mixed with 240.0 gallons of water preheated to 120°F (49°C). The pH of the mixture is adjusted to about 4.5 using hydrochloric acid and the mixing is continued for another 20 minutes. The slurry is transferred to a membrane feed tank through a 20-mesh strainer. The slurry is fed to an ultrafiltration membrane system containing two tubular membranes, both of 50,000 MWCO. The temperature of the suspension is maintained at about 48.9° C (120°F) during membrane processing. About 85.0 wt. % of the original feed volume added to the membrane feed tank is removed as permeate. The pH of the retentate from the membrane system is adjusted to about 7.5 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 60 seconds and then flashed into a flash cooler with 15" of vacuum. The flash cooled slurry is spray dried. The dried product was analysed to determine the ash content thereof, and lard gel strength, protein content, and NSI are determined according to the procedures described herein. The results of the analysis are shown in Table 7.

**Table 7**

| | |
|---|---|
| Lard Gel Strength, g | 579.0 |
| Protein (wt. %, mfb) | 77.75 |
| Ash (wt. %, mfb) | 3.08 |
| Calcium (wt. %, mfb) | 0.29 |
| Potassium (wt. %, m1b) | 0.38 |
| Magnesium (wt. %, mfb) | 0.11 |
| Sodium (wt. %, mfb) | 1.35 |
| Nitrogen Solubility Index, NSI (%) | 54.3 |

### EXAMPLE 8

A composition of the present invention is prepared by washing an alcohol washed soy protein concentrate with an aqueous wash having a pH slightly above the isoelectric point of soy protein utilizing ultrafiltration only, then cooking and shearing the washed protein material at a pH of 7.5. About 50.0 lbs (22.7 kg) of Procon^{®} 2000 (a commercially available traditional alcohol washed soy protein concentrate) is mixed with 240.0 gallons of water preheated to 120°F (49°C). The pH of the mixture is adjusted to about 5.0 using hydrochloric acid and the mixing is continued for another 20 minutes. The slurry is transferred to a membrane feed tank through a 20-mesh strainer. The slurry is fed to an ultrafiltration membrane system containing two tubular membranes, both of 50,000 MWCO. The temperature of the suspension is maintained at about 48.9° C (120°F) during membrane processing. About 80.0 wt. % of the original feed volume added to the membrane feed tank is removed as permeate. The pH of the retentate from the membrane system is adjusted to about 7.5 using sodium hydroxide. This slurry is then jet cooked to a temperature of about 300°F (149°C), passed through a shear pump (Dispax Reactor Model DR 3-6/6A equipped with fine, fine and superfine generators in series, operating at 8000 rpm, IKA Works, Wilmington, NC), held for 60 seconds and then flashed into a flash cooler with 15" of vacuum. The flash cooled slurry is spray dried. The dried product is analysed to determine the ash content thereof, and lard gel strength, protein content, and NSI are determined according to the procedures described herein. The results of the analysis are shown in Table 8.

**Table 8**

| | |
|---|---|
| Lard Gel Strength, g | 677.0 |
| Protein (wt. %, mfb) | 78.13 |
| Ash (wt. %, mfb) | 2.48 |
| Calcium (wt. %, mfb) | 0.31 |
| Potassium (wt. %, mfb) | 0.44 |
| Magnesium (wt. %, mfb) | 0.12 |
| Sodium (wt. %, mfb) | 1.07 |
| Nitrogen Solubility Index, NSI (%) | 63.9 |

### EXAMPLE 9

In a continuous process trial, Danpro H (a commercially available traditional alcohol washed soy protein concentrate) is hydrated and mixed with hot water to achieve 9% solids while maintaining temperature at 185°F (85°C). The pH of the mixture is adjusted to about 5.2 using sulphuric acid while mixing is continued. The slurry is centrifuged in a counter-current flow using two separation steps using decanting centrifuges. The centrifuge cake is diluted to about 12.0 wt. % solids and the pH of the slurry is adjusted to about 7.5 using sodium hydroxide. This slurry is then jet cooked to a temperature of about 300°F (149°C), held for 15 seconds and then flashed into a flash cooler to a temperature of 185°F (85°C). The flash cooled slurry is spray dried. The spray dried powder is lecithinated with 0.6% of lecithin-oil mixture (1:1 ratio) to enhance the flowability of the powder. The uncooked and cooked emulsification strengths of the spray dried powder are measured according to the procedure described herein. The results of the analysis (average of 14 samples taken during the trial, and the maximum and minimum values of the samples) are shown in Table 9.

**Table 9**

| | **Avg.** | **Max** | **Min** |
|---|---|---|---|
| Uncooked Emulsification Strength (g) | 225.9 | 260 | 190 |
| Cooked Emulsification Strength (g) | 294.4 | 391 | 252 |

### EXAMPLE 10

In a continuous process trial, Procon 2000 (a commercially available traditional alcohol washed soy protein concentrate) is initially hydrated and mixed with hot water to achieve 9% solids. The pH of the mixture is adjusted to about 4.5 using hydrochloric acid while mixing is continued. The slurry is centrifuged at 135°F (57°C) at flow rate of 105 pounds per minute in a counter-current flow using two separation steps using P-3400 decanting centrifuges. The centrifuge cake from first separation is diluted using water at 90°F (32°C), where the flow rate of water addition is 9.6 times the weight of Procon 2000. The supernatant (liquor) from the first centrifugation is discarded. The supernatant (liquor) from the second centrifugation is recycled to hydrate the Procon 2000 in the continuous process. The cake from the second centrifugation is diluted with water to about 13.0 wt. % solids. The pH of the slurry is adjusted to about 7.2 using sodium hydroxide. This slurry is then jet cooked to a temperature of about 300°F (149°C), held for 15 seconds and then flashed into a flash cooler to a temperature of about 180°F (82°C). The flash cooled slurry is spray dried. The spray dried powder is used to determine lard gel strength, uncooked emulsification strength and cooked emulsification strength according to the procedure described herein.

The spray dried powder has a lard gel strength of 622 g, an uncooked emulsification strength of 260 g, and a cooked emulsification strength of 391 g.

### EXAMPLE 11

The trial of Example 10 is repeated except that the slurry is jet cooked at a temperature of about 275°F (135°C). The spray dried powder has a lard gel strength of 617 g, an uncooked emulsification strength of 213 g, and a cooked emulsification strength of 287 g.

### EXAMPLE 12

The trial of Example 10 is repeated except that the jet cooked slurry is held for 30 seconds prior to flash cooling. The spray dried powder has a lard gel strength of 606 g, an uncooked emulsification strength of 196 g, and a cooked emulsification strength of 300 g.

### EXAMPLE 13

The present novel soy protein material is utilized in the preparation of comminuted meat products having reduced meat protein inclusion compared to traditional comminuted meat products. A pasteurised comminuted meat product is formulated from the ingredients listed in Table 10.

**Table 10**

| Ingredients | Formula (wt. %) |
|---|---|
| Mechanically Separated Turkey (20% Fat) | 51.000 |
| Pork Back Fat (85% Fat) | 11.500 |
| Water l Ice | 27.665 |
| Novel Soy Protein Concentrate | 7.000 |
| Salt | 1.960 |
| Sodium Tripolyphosphate | 0.500 |
| Cure Salt (6-25% sodium nitrite) | 0.320 |
| Sodium Erythorbate | 0.055 |
| Total | 100.000 |

The formulation is calculated so that the final comminuted meat product will have ≤1.0 wt. % meat protein, ≥ 2.0 wt. % total protein, ≥20.0 wt. % total fat, and ≥62.0 wt. % moisture. The controlled composition of these attributes is designed to verify the ability of the present novel soy protein concentrate to bind fat and moisture as well as contribute texture to a final cooked meat product.

The meat components are ground into ½" pieces prior to processing. The mechanically separated turkey, salt, cure salt and sodium tripolyphosphate are chopped together in a vacuum bowl chopper at 1500 rpm (Meissner 35L, RMF, Kansas City, MO) for 2 minutes to facilitate meat protein extraction. The water / ice mixture along with the present novel soy protein concentrate is added and chopped for 2 minutes at 2000 rpm to insure full hydration of the dry protein concentrate. The pork back fat and erythorbate are then added and chopped for 4 revolutions of the bowl to uniformly disperse these final ingredients. Once uniform dispersion is achieved, vacuum is applied to the bowl (≥25 mm Hg) with an additional 4 minutes of chopping at 3850 rpm. Final mixture temperature is 13°C to 16°C (55° to 60°F). The mixture is then removed from the bowl chopper and vacuum stuffed in 55 mm moisture impermeable casings with clip enclosures for end sealing. The encased mixture is then heat processed to 74°C (165°F). The cooked meat product is then cooled at room temperature.

The meat formulation can be further modified with more or less meat protein and varying novel protein inclusion levels to determine the optimum texture contribution as well as the optimum meat protein replacement for further application development as may be desired for specific applications in the processed meat industry.

### COMPARATIVE EXAMPLE 1

A soy protein material is prepared according to the process of U.S. Patent No. 4,234,620 which subjects an alcohol washed protein concentrate to shear without first removing solubles from the alcohol washed protein concentrate with an aqueous acidic wash. About 25 lbs of Procon^{®} 2000 (a commercially available traditional alcohol washed soy protein concentrate) is mixed with 175 lbs of water. About 0.30 lb of 50% sodium hydroxide is added to the slurry. The resulting aqueous slurry has 1000 parts by weight Procon^{®} 2000, 7000 parts by weight water, and 6 parts by weight sodium hydroxide, all expressed on dry solids basis. The slurry is mixed for 20 minutes. The slurry is then jet cooked and passed through a shear pump to provide the shearing action necessary to restructure the protein material. The shear pump is a Dispax Reactor Model DR 3-6/6A (IKA Works, Wilmington, NC) equipped with fine, fine and superfine generators in series, operating at 8000 rpm at a flow rate of 5 gallons per minute. The heated sheared slurry is held for 19 seconds at high temperature and then is discharged into a tank at a temperature of about 220°F (104°C). The pH of the jet cooked slurry is adjusted to about 6.4 using hydrochloric acid, and then the slurry is spray dried. In the dryer, the inlet temperature is about 450°F and the outlet temperature is about 200°F. The dried product is analysed to determine the protein content and ash content as well as its lard gel strength and NSI. The results of the analysis are shown below in Table 11.

**Table 11**

| | |
|---|---|
| Lard Gel Strength, g | 401.0 |
| Protein (wt. %, mfb) | 72.25 |
| Ash (wt. %, mfb) | 7.28 |
| Calcium (wt. %, mfb) | 0.50 |
| Potassium (wt. %, mfb) | 2.36 |
| Magnesium (wt. %, mfb) | 0.39 |
| Sodium (wt. %, mfb) | 0.85 |
| Nitrogen Solubility Index, NSI (%) | 56.0 |

The lard gel strength of the soy protein material of the present invention, as shown in Examples 1-8 and 10-12, is much greater than that of the material produced in Comparative Example 1.

### COMPARATIVE EXAMPLE 2

The uncooked emulsification strength and cooked emulsification strength of Arcon S, a commercially available soy protein concentrate, are measured. 14 samples of Arcon S are analysed for uncooked and cooked emulsification strengths in accordance with the procedure set forth above in the definitions section. The results of the analysis are shown below in Table 12, where the average, maximum, and minimum measured uncooked and cooked emulsification strengths are reported.

**Table 12**

| **Arcon S** | **Avg.** | **Max** | **Min** |
|---|---|---|---|
| Uncooked Emulsification Strength (g) | 122 | 146 | 104 |
| Cooked Emulsification Strength (g) | 239 | 273 | 205 |

The uncooked emulsion strength and cooked emulsion strength of the soy protein material of the present invention, as shown in Examples 9-12, are much greater than those of the material produced in Comparative Example 2.

### COMPARATIVE EXAMPLE 3

The lard gel strength of Arcon S, a commercially available soy protein concentrate, is measured. 5 samples of Arcon S are analysed for lard gel strength in accordance with the procedure set forth above in the definitions section. The results of the analysis are shown below in Table 13, where the average, maximum, and minimum measured lard gel strengths are reported.

**Table 13**

| **Arcon S** | **Avg.** | **Max** | **Min** |
|---|---|---|---|
| Lard Gel Strength (g) | 438 | 540 | 305 |

The lard gel strength of the soy protein material of the present invention, as shown in Examples 1-8 and 10-12, is much greater than that of the material produced in Comparative Example 3.

## Claims

1. A method for obtaining a soy protein material comprising the steps of:
slurrying an alcohol washed soy protein material in water;
adjusting the pH of the slurry to an acid pH of less than 6.0;
removing soluble components from the acid pH slurry;
adjusting the pH of the acid pH slurry to above 7.0 after removing soluble components from the acid pH slurry to provide a neutralized slurry; and
subjecting the neutralized slurry to heat treatment at a sufficient temperature and for a sufficient period of time to change the structure of the soy protein material.

2. A method according to Claim 1, further comprising the step of subjecting the heat treated slurry to a shearing process.

3. A method according to Claim 2, wherein said shearing process comprises subjecting the neutralized slurry to shearing in a shearing pump.

4. A method according to any one of Claims 1 to 3, wherein said soluble components are removed from said acid pH slurry by centrifugation, said soluble components being removed in a centrifuge liquor.

5. A method according to Claim 4, further comprising the additional step of recovering proteins from the centrifuge liquor using an ultrafiltration process.

6. A method according to any one of Claims 1 to 3, wherein said soluble components are removed from said acid pH slurry by ultrafiltration.

7. A method according to any one of Claims 1 to 6, further comprising the step of flash cooling the heat treated slurry.

8. A method according to Claim 7, further comprising the step of drying the soy protein material in the flash cooled slurry.

9. A method according to any one of Claims 1 to 8, wherein said alcohol washed soy protein material is an alcohol washed soy protein concentrate.

10. A soy protein material obtainable by the method of any one of Claims 1 to 9 and having a lard gel strength of at least 560.0 grams.

11. A material according to Claim 10, having a lard gel strength of at least 575.0 grams.

12. A material according to Claim 10, having a lard gel strength of at least 600.0 grams.

13. A material according to any one of Claims 10 to 12, having a protein content of at least 65.0 weight percent on a moisture free basis.

14. A material according to Claim 13, having a protein content of from 75.0 weight percent to 85.0 weight percent on a moisture free basis.

15. A material according to Claim 13, having a protein content of at least 90.0 weight percent on a moisture free basis.

16. A material according to any one of Claims 10 to 15, which is a soy protein concentrate or a soy protein isolate.

17. A material according to Claim 16, having an uncooked emulsification strength of at least 190.0 grams.

18. A material according to Claim 17, having an uncooked emulsification strength of at least 225.0 grams.

19. A material according to Claim 16, having a cooked emulsification strength of at least 275.0 grams.

20. A material according to Claim 19, having a cooked emulsification strength of at least 300.0 grams.

21. A soy protein material obtainable by the method of any one of claims 1 to 9 and having an uncooked emulsification strength of at least 190.0 grams.

22. A material according to Claim 21, having an uncooked emulsification strength of at least 225.0 grams.

23. A material according to Claim 21 or Claim 22, having a protein content of at least 65.0 weight percent on a moisture free basis.

24. A material according to Claim 23, having a protein content of from 75.0 weight percent to 85.0 weight percent on a moisture free basis.

25. A material according to Claim 21 or Claim 22, having a protein content of at least 90.0 weight percent on a moisture free basis.

26. A material according to any one of Claims 21 to 25, which is a soy protein concentrate or a soy protein isolate.

27. A material according to Claim 26, having a lard gel strength of at least 575.0 grams.

28. A material according to Claim 27, having a lard gel strength of at least 600.0 grams.

29. A material according to any one of Claims 21 to 28, having a cooked emulsification strength of at least 275.0 grams.

30. A material according to Claim 29, having a cooked emulsification strength of at least 300.0 grams.

31. A soy protein material obtainable by the method of any one of claims 1 to 9 and having a cooked emulsification strength of at least 275.0 grams.

32. A material according to Claim 31, having a cooked emulsification strength of at least 300.0 grams.

33. A material according to Claim 31 or Claim 32, having a protein content of at least 65.0 weight percent on a moisture free basis.

34. A material according to Claim 33, having a protein content of from 75.0 weight percent to 85.0 weight percent on a moisture free basis.

35. A material according to Claim 33, having a protein content of at least 90.0 weight percent on a moisture free basis.

36. A material according to any one of Claims 31 to 35, which is a soy protein concentrate or a soy protein isolate.

37. A material according to Claim 36, having a lard gel strength of at least 575.0 grams.

38. A material according to Claim 37, having a lard gel strength of at least 600.0 grams.

39. A material according to any one of Claims 31 to 38, having an uncooked emulsification strength of at least 225.0 grams.

40. A food product comprising a blend of a soy protein material according to any one of Claims 10 to 39; and at least one food ingredient.

41. A food product according to Claim 40, wherein the food ingredient is an emulsified meat.

42. A food product according to Claim 40, wherein the food ingredient is soup stock.

43. A food product according to Claim 40, wherein the food ingredient is a dairy product.

44. A food product according to Claim 40, wherein the food ingredient is a bread ingredient.

45. A composition comprising a material according to any one of Claims 10 to 39 and at least one other material.

## Patentansprüche

1. Verfahren zum Erhalten eines Sojaproteinmaterials, das die folgenden Schritte umfasst:
Aufschlämmen eines mit Alkohol gewaschenen Sojaproteinmaterials in Wasser;
Einstellen des pH-Werts der Aufschlämmung auf einen sauren pH-Wert von weniger als 6,0;
Entfernen löslicher Komponenten aus der Aufschlämmung mit saurem pH-Wert;
Einstellen des pH-Werts der Aufschlämmung mit saurem pH-Wert auf über 7,0 nachdem die löslichen Komponenten aus der Aufschlämmung mit saurem pH-Wert entfernt wurden, um eine neutralisierte Aufschlämmung bereitzustellen; und
Wärmebehandeln der neutralisierten Aufschlämmung bei einer ausreichenden Temperatur und für einen ausreichenden Zeitraum, um die Struktur des Sojaproteinmaterials zu verändern.

2. Verfahren nach Anspruch 1, das ferner einen Schritt umfasst, bei dem die wärmebehandelte Aufschlämmung einem Scherprozess unterzogen wird.

3. Verfahren nach Anspruch 2, wobei der Scherprozess das Scheren der neutralisierten Aufschlämmung mit einer Scherpumpe umfasst.

4. Verfahren nach einem der Ansprüche 1 bis 3, wobei die löslichen Komponenten aus der Aufschlämmung mit saurem pH-Wert durch Zentrifugieren entfernt werden, wobei die löslichen Komponenten in einer Zentrifugenflüssigkeit entfernt werden.

5. Verfahren nach Anspruch 4, das ferner den zusätzlichen Schritt des Gewinnens von Proteinen aus der Zentrifugenflüssigkeit unter Verwendung eines Ultrafiltrationsprozesses umfasst.

6. Verfahren nach irgendeinem der Ansprüche 1 bis 3, wobei die löslichen Komponenten aus der Aufschlämmung mit saurem pH-Wert durch Ultrafiltration entfernt werden.

7. Verfahren nach einem der Ansprüche 1 bis 6, das ferner den Schritt des Entspannungskühlens der wärmebehandelten Aufschlämmung umfasst.

8. Verfahren nach Anspruch 7, das ferner den Schritt des Trocknens des Sojaproteinmaterials in der entspannungsgekühlten Aufschlämmung umfasst.

9. Verfahren nach irgendeinem der Ansprüche 1 bis 8, wobei das mit Alkohol gewaschene Sojaproteinmaterial ein mit Alkohol gewaschenes Sojaproteinkonzentrat ist.

10. Sojaproteinmaterial, das durch das Verfahren nach irgendeinem der Ansprüche 1 bis 9 zu erhalten ist, und eine Schmalzgelfestigkeit von mindestens 560,0 Gramm aufweist.

11. Material nach Anspruch 10, das eine Schmalzgelfestigkeit von mindestens 575,0 Gramm aufweist.

12. Material nach Anspruch 10, das eine Schmalzgelfestigkeit von mindestens 600,0 Gramm aufweist.

13. Material nach irgendeinem der Ansprüche 10 bis 12, das einen Proteingehalt von mindestens 65,0 Gewichtsprozent auf Basis der Trockenmasse aufweist.

14. Material nach Anspruch 13, das einen Proteingehalt von 75,0 Gewichtsprozent bis 85,0 Gewichtsprozent auf Basis der Trockenmasse aufweist.

15. Material nach Anspruch 13, das einen Proteingehalt von mindestens 90,0 Gewichtsprozent auf Basis der Trockenmasse aufweist.

16. Material nach irgendeinem der Ansprüche 10 bis 15, das ein Sojaproteinkonzentrat oder ein Sojaproteinisolat ist.

17. Material nach Anspruch 16, das eine ungekochte Emulgierungsstärke von mindestens 190,0 Gramm aufweist.

18. Material nach Anspruch 17, das eine ungekochte Emulgierungsstärke von mindestens 225,0 Gramm aufweist.

19. Material nach Anspruch 16, das eine gekochte Emulgierungsstärke von mindestens 275,0 Gramm aufweist.

20. Material nach Anspruch 19, das eine gekochte Emulgierungsstärke von mindestens 300,0 Gramm aufweist.

21. Sojaproteinmaterial, das durch das Verfahren nach irgendeinem der Ansprüche 1 bis 9 zu erhalten ist, und eine ungekochte Emulgierungsstärke von mindestens 190,0 Gramm aufweist.

22. Material nach Anspruch 21, das eine ungekochte Emulgierungsstärke von mindestens 225,0 Gramm aufweist.

23. Material nach Anspruch 21 oder Anspruch 22, das einen Proteingehalt von mindestens 65,0 Gewichtsprozent auf Basis der Trockenmasse aufweist.

24. Material nach Anspruch 23, das einen Proteingehalt von 75,0 Gewichtsprozent bis 85,0 Gewichtsprozent auf Basis der Trockenmasse aufweist.

25. Material nach Anspruch 21 oder Anspruch 22, das einen Proteingehalt von mindestens 90,0 Gewichtsprozent auf Basis der Trockenmasse aufweist.

26. Material nach irgendeinem der Ansprüche 21 bis 25, das ein Sojaproteinkonzentrat oder ein Sojaproteinisolat ist.

27. Material nach Anspruch 26, das eine Schmalzgelfestigkeit von mindestens 575,0 Gramm aufweist.

28. Material nach Anspruch 27, das eine Schmalzgelfestigkeit von mindestens 600,0 Gramm aufweist.

29. Material nach irgendeinem der Ansprüche 21 bis 28, das eine gekochte Emulgierungsstärke von mindestens 275,0 Gramm aufweist.

30. Material nach Anspruch 29, das eine gekochte Emulgierungsstärke von mindestens 300,0 Gramm aufweist.

31. Sojaproteinmaterial, das durch das Verfahren nach irgendeinem der Ansprüche 1 bis 9 zu erhalten ist, und eine gekochte Emulgierungsstärke von mindestens 275,0 Gramm aufweist.

32. Material nach Anspruch 31, das eine gekochte Emulgierungsstärke von mindestens 300,0 Gramm aufweist.

33. Material nach Anspruch 31 oder Anspruch 32, das einen Proteingehalt von mindestens 65,0 Gewichtsprozent auf Basis der Trockenmasse aufweist.

34. Material nach Anspruch 33, das einen Proteingehalt von 75,0 Gewichtsprozent bis 85,0 Gewichtsprozent auf Basis der Trockenmasse aufweist.

35. Material nach Anspruch 33, das einen Proteingehalt von mindestens 90,0 Gewichtsprozent auf Basis der Trockenmasse aufweist.

36. Material nach irgendeinem der Ansprüche 31 bis 35, das ein Sojaproteinkonzentrat oder ein Sojaproteinisolat ist.

37. Material nach Anspruch 36, das eine Schmalzgelfestigkeit von mindestens 575,0 Gramm aufweist.

38. Material nach Anspruch 37, das eine Schmalzgelfestigkeit von mindestens 600,0 Gramm aufweist.

39. Material nach irgendeinem der Ansprüche 31 bis 38, das eine ungekochte Emulgierungsstärke von mindestens 225,0 Gramm aufweist.

40. Nahrungsmittelprodukt, das ein Mischung aus einem Sojaproteinmaterial nach irgendeinem der Ansprüche 10 bis 39; und mindestens einen Nahrungsmittelbestanteil umfasst.

41. Nahrungsmittelprodukt nach Anspruch 40, wobei der Nahrungsmittelbestandteil emulgiertes Fleisch ist.

42. Nahrungsmittelprodukt nach Anspruch 40, wobei der Nahrungsmittelbestandteil Supperibrühe ist.

43. Nahrungsmittelprodukt nach Anspruch 40, wobei der Nahrungsmittelbestandteil ein Milchprodukt ist.

44. Nahrungsmittelprodukt nach Anspruch 40, wobei der Nahrungsmittelbestandteil ein Brotbestandteil ist.

45. Zusammensetzung, die ein Material nach irgendeinem der Ansprüche 10 bis 39 und mindestens ein anderes Material umfasst.

## Revendications

1. Un procédé pour obtenir un matériau à base de protéine de soja comprenant les étapes suivantes :
- mise en suspension dans de l'eau d'un matériau à base de protéine de soja ayant été lavé avec de l'alcool ;
- ajustement du pH de la suspension à un pH acide inférieur à 6,0 ;
- élimination des constituants solubles contenus dans la suspension à pH acide ;
- ajustement du pH de la suspension à pH acide à une valeur supérieure à 7,0 après élimination des constituants solubles contenus dans la suspension à pH acide pour obtenir une suspension neutralisée ; et
- traitement thermique de la suspension neutralisée à une température suffisante et pendant une durée suffisante pour changer la structure du matériau à base de protéine de soja.

2. Un procédé selon la revendication 1, comprenant en outre l'étape de cisaillement de la suspension ayant subi le traitement thermique.

3. Un procédé selon la revendication 2, dans lequel ledit cisaillement comprend le cisaillement de la suspension neutralisée par une pompe de cisaillement.

4. Un procédé selon une quelconque des revendications 1 à 3, dans lequel lesdits constituants solubles sont éliminés de ladite suspension à pH acide par centrifugation, lesdits constituants solubles étant éliminés dans une liqueur centrifuge.

5. Un procédé selon la revendication 4, comprenant en outre l'étape additionnelle de récupération des protéines de la liqueur centrifuge à l'aide d'un procédé d'ultrafiltration.

6. Un procédé selon une quelconque des revendications 1 à 3, dans lequel lesdits constituants solubles sont éliminés de ladite suspension à pH acide par ultrafiltration.

7. Un procédé selon une quelconque des revendications 1 à 6, comprenant en outre l'étape de refroidissement flash de la suspension ayant subi le traitement thermique.

8. Un procédé selon la revendication 7, comprenant en outre l'étape de séchage du matériau à base de protéine de soja dans la suspension ayant subi le refroidissement flash.

9. Un procédé selon une quelconque des revendications 1 à 8, dans lequel ledit matériau à base de protéine de soja ayant été lavé avec de l'alcool est un concentré de protéine de soja ayant été lavé avec de l'alcool.

10. Un matériau à base de protéine de soja susceptible d'être obtenu par le procédé selon une quelconque des revendications 1 à 9, présentant une force en gelée de lard d'au moins 560,0 grammes.

11. Un matériau selon la revendication 10, présentant une force en gelée de lard d'au moins 575,0 grammes.

12. Un matériau selon la revendication 10, présentant une force en gelée de lard d'au moins 600,0 grammes.

13. Un matériau selon une quelconque des revendications 10 à 12, présentant une teneur en protéine, exprimée sur une base exempte d'humidité, d'au moins 65,0 % en poids.

14. Un matériau selon la revendication 13, présentant une teneur en protéine, exprimée sur une base exempte d'humidité, comprise entre 75,0 % en poids et 85,0 % en poids.

15. Un matériau selon la revendication 13, présentant une teneur en protéine, exprimée sur une base exempte d'humidité, d'au moins 90,0 %.

16. Un matériau selon une quelconque des revendications 10 à 15, qui est un concentré de protéine de soja ou un isolat de protéine de soja.

17. Un matériau selon la revendication 16, présentant une force d'émulsification à l'état cru d'au moins 190,0 grammes.

18. Un matériau selon la revendication 17, présentant une force d'émulsification à l'état cru d'au moins 225,0 grammes.

19. Un matériau selon la revendication 16, présentant une force d'émulsification à l'état cuit d'au moins 275,0 grammes.

20. Un matériau selon la revendication 19, présentant une force d'émulsification à l'état cuit d'au moins 300,0 grammes.

21. Un matériau à base de protéine de soja susceptible d'être obtenu par le procédé selon une quelconque des revendications 1 à 9, présentant une force d'émulsification à l'état cru d'au moins 190,0 grammes.

22. Un matériau selon la revendication 21, présentant une force d'émulsification à l'état cru d'au moins 225,0 grammes.

23. Un matériau selon la revendication 21 ou la revendication 22, présentant une teneur en protéine, exprimée sur une base exempte d'humidité, d'au moins 65,0 % en poids.

24. Un matériau selon la revendication 23, présentant une teneur en protéine, exprimée sur une base exempte d'humidité, comprise entre 75,0 % en poids et 85,0 % en poids.

25. Un matériau selon la revendication 21 ou la revendication 22, présentant une teneur en protéine, exprimée sur une base exempte d'humidité, d'au moins 90,0 % en poids.

26. Un matériau selon une quelconque des revendications 21 à 25, qui est un concentré de protéine de soja ou un isolat de protéine de soja.

27. Un matériau selon la revendication 26, présentant une force en gelée de lard d'au moins 575,0 grammes.

28. Un matériau selon la revendication 27, présentant une force en gelée de lard d'au moins 600,0 grammes.

29. Un matériau selon une quelconque des revendications 21 à 28, présentant une force d'émulsification à l'état cuit d'au moins 275,0 grammes.

30. Un matériau selon la revendication 29, présentant une force d'émulsification à l'état cuit d'au moins 300,0 grammes.

31. Un matériau à base de protéine de soja susceptible d'être obtenu par le procédé selon une quelconque des revendications 1 à 9, présentant une force d'émulsification à l'état cuit d'au moins 275,0 grammes.

32. Un matériau selon la revendication 31, présentant une force d'émulsification à l'état cuit d'au moins 300,0 grammes.

33. Un matériau selon la revendication 31 ou la revendication 32, présentant une teneur en protéine, exprimée sur une base exempte d'humidité, d'au moins 65,0 % en poids.

34. Un matériau selon la revendication 33, présentant une teneur en protéine, exprimée sur une base exempte d'humidité, comprise entre 75,0 % en poids et 85,0 % en poids.

35. Un matériau selon la revendication 33, présentant une teneur en protéine, exprimée sur une base exempte d'humidité, d'au moins 90,0 % en poids.

36. Un matériau selon une quelconque des revendications 31 à 35 qui est un concentré de protéine de soja ou un isolat de protéine de soja.

37. Un matériau selon la revendication 36, présentant une force en gelée de lard d'au moins 575,0 grammes.

38. Un matériau selon la revendication 37, présentant une force en gelée de lard d'au moins 600,0 grammes.

39. Un matériau selon une quelconque des revendications 31 à 38, présentant une force d'émulsification à l'état cru d'au moins 225,0 grammes.

40. Un produit alimentaire comprenant un mélange d'un matériau à base de protéine de soja selon une quelconque des revendications 10 à 39 ; et d'au moins un ingrédient alimentaire.

41. Un produit alimentaire selon la revendication 40, dans lequel l'ingrédient alimentaire est une viande émulsifiée.

42. Un produit alimentaire selon la revendication 40, dans lequel l'ingrédient alimentaire est une base de soupe.

43. Un produit alimentaire selon la revendication 40, dans lequel l'ingrédient alimentaire est un produit laitier.

44. Un produit alimentaire selon la revendication 40, dans lequel l'ingrédient alimentaire est un constituant du pain.

45. Une composition comprenant un matériau selon une quelconque des revendications 10 à 39 et au moins une autre matière.
